# EUROPÄISCHE PATENTSCHRIFT

(11) **EP 3 799 578 B1**
(45) Veröffentlichungstag und Bekanntmachung des Hinweises auf die Patenterteilung: **17.08.2022**
(21) Anmeldenummer: 19721613.8
(22) Anmeldetag: 02.05.2019
(51) Int. Cl.: B01D 21/01, C02F 1/52, C02F 101/10, C02F 103/00

(54) **MITTEL ZUR SENKUNG DES PHOSPHATGEHALTS IN ABWÄSSERN**
AGENT FOR LOWERING THE PHOSPHATE CONTENT IN WASTE WATERS
MOYENS DE RÉDUCTION DE LA TENEUR EN PHOSPHATE DANS LES EAUX USÉES

(30) Priorität: 03.05.2018 EP 18000424
(43) Veröffentlichungstag der Anmeldung: 07.04.2021
(73) Patentinhaber: Schaefer Kalk GmbH & Co. KG, 65582 Diez (DE)
(72) Erfinder: HELLMANN, Benjamin Johannes, 56412 Niedererbach (DE); ERMEL, Volker, 65558 Burgschwalbach (DE)
(74) Vertreter: Mai Besier
(86) Internationale Anmeldenummer: PCT/EP2019/061238
(87) Internationale Veröffentlichungsnummer: WO 2019/211375

(56) Entgegenhaltungen:
- EP-A1- 0 003 119
- EP-A1- 1 541 531
- CN-A- 107 697 976
- AGUILAR M I ET AL: "Nutrient removal and sludge production in the coagulation-flocculation process", WATER RESEARCH, ELSEVIER, AMSTERDAM, NL, Bd. 36, Nr. 11, 1. Juni 2002 (2002-06-01), Seiten 2910-2919, XP004361288, ISSN: 0043-1354, DOI: 10.1016/S0043-1354(01)00508-5

## Beschreibung

Die vorliegende Erfindung betrifft ein Mittel zur Senkung des Phosphatgehalts in Abwässern, ein Verfahren zur Senkung des Phosphatgehalts in Abwässern sowie die Verwendung des Mittels zur Senkung des Phosphatgehalts in Abwässern.

Zur Senkung des Phosphatgehalts in Abwässern sind grundsätzlich die chemische Phosphat-Fällung (P-Fällung) durch Zugabe von Fällungsmitteln und die biologische Phosphor-Elimination (P-Elimination) durch Verstoffwechselung der Phosphate in der Biomasse des Belebtschlammes bekannt.

Die chemische P-Fällung wird üblicherweise in Simultanfällung, Vor- und Nachfällung unterteilt.

In wässrigen Systemen gelöste Phosphate - insbesondere ortho-Phosphate - können mit Hilfe geeigneter Fällungsmittel in ungelöste Phosphate umgewandelt und als Feststoff aus dem wässrigen System, zusammen mit anderen Feststoffen, entfernt werden. Die abgeschiedenen Phosphate sind anschließend Bestandteil des Schlammes.

Gängige Fällungsmittel sind:
∘ Eisenchloride (FeCl₂ oder FeCl₃)
o Eisenchloridsulfat (FeClSO₄)
o Eisen(II)-sulfat / Grünsalz (FeSO₄)
o Aluminiumsulfat (Al₂(SO₄)₃)
o Aluminiumchloride (AlCl₃)
o Polyaluminiumchloride (Alₓ(OH)_{y}Cl_{z})
o Natriumaluminate (NaAl(OH)₄)
∘ Kalkmilch (Ca(OH)₂),
wobei Eisen- und Aluminiumsalze oder Lösungen dieser Salze als Fällungsmittel bevorzugt eingesetzt werden.

Werden die Fällungsmittel direkt in die biologische Reinigungsstufe zugegeben, so spricht man von einer Simultanfällung. Die Simultanfällung ist eine Fällungsreaktion, bei der im Wasser gelöste Ionen durch Zugabe eines Fällungsmittels in eine wasserunlösliche Verbindung überführt werden. Weiterhin führt die Zugabe der Fällmittel zu einer verbesserten Schlammstruktur und zu besseren Absetzeigenschaften. Eine Simultanfällung wird somit oft nicht nur aus Gründen der Nährstoffentfernung, sondern auch wegen der Verbesserung des Anlagenbetriebes vorgenommen, da damit die Trennung von Belebtschlamm und gereinigtem Abwasser im Nachklärbecken verbessert wird.

Vorfällung nennt man die Entfernung von Phosphor aus dem Abwasser durch die Überführung in ungelöste Metallsalze. Diese Fällung wird vor der biologischen Stufe vorgenommen. Beispielsweise kann das Vorklärbecken zum Absetzen der Fällungsprodukte verwendet werden.

Der Schwerpunkt bei der Vorfällung ist nicht die Phosphatfällung selbst, sondern die Entlastung der biologischen Stufe. Gerade veraltete Kläranlagen sind häufig überlastet. Wenn sich die Erneuerung aus verschiedenen Gründen hinauszögert, können mit Hilfe einer Vorfällung auch bei diesen Anlagen die aktuellen Ablaufwerte eingehalten werden. Nachteile dieses Verfahrens sind ein sehr hohes Primärschlammaufkommen und ein sehr hoher Verbrauch von Fällmitteln, insbesondere in Form von dreiwertigen Metallsalzen.

Bei der Nachfällung findet die Phosphorfällung nach der Nachklärung statt. Verwendet werden insbesondere dreiwertige Metallsalze. Die Nachfällung gewährleistet sehr niedrige Phosphorablaufwerte, allerdings ist der Verbrauch an Fällungsmittel sehr hoch. Zudem ist eine nachgeschaltete Abtrennung der entstehenden Flocken über eine separate Filtrationsstufe notwendig.

Bei der biologischen Phosphorelimination (kurz: Bio-P) werden Polyphosphatakkumulierende Organismen (PAO) in einem anoxischen Umfeld in eine Stresssituation gebracht. Wenn diese Mikroorganismen keinen Sauerstoff und Nitrat zur Verfügung haben, sind die primären Nahrungsquellen entzogen und die Mikroorganismen müssten absterben. Um das zu verhindern, geben die Mikroorganismen in dieser Situation die in ihren Zellen eingelagerten Phosphate ab, wodurch Energie frei wird, welche sie zum Überleben verwenden. Wenn die Mikroorganismen anschließend in einen aerobes, sauerstoffreiches Umfeld gelangen, nehmen sie das zuvor abgegebene Phosphat wieder auf und lagern noch weitere Phosphate in ihren Zellen ein, wodurch der Gesamt-Phosphatgehalt im Wasser herabgesetzt wird.

In der Praxis wird meist eine Kombination der verschiedenen Verfahren genutzt.

Die Anmeldung JP 11319411 A offenbart ein Wasserreinigungsmittel mit hoher Löslichkeit, das in der Lage ist, reiche Nährstoffquellen, Wasserverunreinigungen und bakterielle Gruppen an sich zu binden und auszufällen. Das Wasserreinigungsmittel umfasst ein Pulver von Muschelschalen, vorzugsweise von Hokkaido-Muschelschalen, wobei das Wasserreinigungsmittel weiterhin vorzugsweise ein Fällungsmittel, insbesondere Aluminiumsulfat, umfasst. Das Verhältnis von Muschelschalen zu Fällungsmittel soll vorzugsweise im Bereich von 8/2 bis 6/4 liegen. Zur Wasserreinigung soll das Wasserreinigungsmittel dem zu reinigenden Wasser vorzugsweise mit einer Konzentration von 0,5 Gew.-% oder weniger, bezogen auf die Muschelschalen, zugesetzt werden. Alternativ könne das Wasserreinigungsmittel auch in einer Menge von 12 bis 13 kg per tsubo (3,3 m²) dem zu reinigenden Wasser zugegeben werden. Zur Reinigung von Schwermetall-enthaltenden Wasser wird die Verwendung eines Fällungsmittels, wie Eisen(III)-chlorid nach oder zusammen mit dem Wasserreinigungsmittel der JP 11319411 A vorgeschlagen, um die Schwermetalle auszufällen.

Die Druckschrift weist darauf hin, dass die Muschelschalen hauptsächlich aus Calciumcarbonat bestehen, welches jedoch eine deutlich höhere Wasserlöslichkeit als kommerziell erhältliches Calciumcarbonat aufweist, das aus Kalkstein durch Aufreinigung erhalten wird. Genauer gesagt soll die Löslichkeit dieses Calciumcarbonats 40,59 mg/100 mg betragen.

Im einzigen Beispiel der Druckschrift wird ein Wasserreinigungsmittel, bestehend aus 70 Gew.-% Hokkaido-Muschelschalen und 30 Gew.-% Aluminiumsulfatpulver, zur Reinigung von Seewasser bei einer Konzentration von 0,1 Gew.-%, bezogen auf das zu reinigende Wasser, getestet und eine Abnahme des Gesamtphosphorgehalts von ursprünglich 1,4 mg/L auf 0,1 mg/L oder weniger festgestellt.

Die Anmeldung JP 09-038414 A betrifft ein Fällungsmittel mit hoher Sinkgeschwindigkeit, welches bei Zugabe zu Abwasser große Flocken bildet und die Behandlung des Klärschlamms erleichtert. Das Koagulierungssedimentierungsmittel enthält zwei Arten Calciumcarbonat, grobkörnige Partikel mit einem mittleren Teilchendurchmesser von 50-500 µm und feine Partikel mit einem mittleren Teilchendurchmesser von 1-30 µm. Das Gewichtsverhältnis der grobkörnigen Partikel und der feinen Partikel ist vorzugsweise im Bereich von 2:1 bis 40:1. Die Menge des Calciumcarbonats beträgt vorzugsweise mindestens 60 Gew.-%. Darüber hinaus enthält das Koagulierungssedimentierungsmittel vorzugsweise ein lösliches Aluminiumsalz, ein lösliches Eisensalz oder ein polymeres Fällungsmittel eines organischen Systems. In diesem Zusammenhang werden Aluminiumsulfat, Polyaluminiumchlorid, Eisen (II)-sulfat und Eisen (III)-sulfat beispielhaft erwähnt.

In den Beispielen dieser Druckschrift wird ein Fällungsmittel, bestehend aus grobkörnigen Calciumcarbonatteilchen mit einem mittleren Teilchendurchmesser von 100 µm, feinen Calciumcarbonatteilchen mit einem mittleren Teilchendurchmesser von 3,1 µm, Aluminiumsulfat, Calciumhydroxid und Polyacrylamid, zur Reinigung von Schmutzwasser getestet. Beobachtet wurden eine Verbesserung der Filterbarkeit, der Flockengröße, der Sedimentationsgeschwindigkeit, der Transparenz sowie des pH des gereinigten Wassers, verglichen mit dem unbehandelten Schmutzwasser. Aussagen zum Phosphorgehalt des Schmutzwassers und/oder des gereinigten Wassers sind der Druckschrift allerdings nicht zu entnehmen.

Der Artikel "Nutrient removal and sludge production in the coagulation-flocculation process" von Aguilar, M.I., Sacz, J., Llorens, M., Soler, A. und Ortuno, J.F. in Water Resarch (2002), 36 (11), Seite 2910-2919 beschäftigt sich mit der Behandlung von Abwasser einer Schlachterei. Fe₂(SO₄)₃, Al₂(SO₄)₃ und Polyaluminiumchlorid wurden als Koagulationsmittel eingesetzt. Aktivierte Kieselsäure, Aktivkohle, gefälltes Calciumcarbonat (PCC), kationisches Polyacrylamid, Polyacrylsäure, anionisches Polyacrylamid und Polyvinylalkohol wurden als Koagulationshilfsmittel verwendet, wobei Calciumcarbonat nur in Kombination mit Al₂(SO₄)₃ oder Polyaluminiumchlorid eingesetzt wurde. Für Fe₂(SO₄)₃ wird unabhängig vom Koagulationshilfsmittel eine Entfernung von ortho-Phosphat von 100% und eine Entfernung von Phosphor insgesamt von mindestens 99,53% berichtet. Für Al₂(SO₄)₃ wird unabhängig vom Koagulationshilfsmittel eine Entfernung von ortho-Phosphat von 100% und eine Entfernung von Phosphor insgesamt von mindestens 98,88% berichtet, wobei die Verwendung von PCC als Koagulationshilfsmittel die schlechtesten Ergebnisse lieferte. Für Polyaluminiumchlorid wird unabhängig vom Koagulationshilfsmittel eine Entfernung von ortho-Phosphat von 100% und eine Entfernung von Phosphor insgesamt von mindestens 99,70% berichtet, wobei die Verwendung von PCC als Koagulationshilfsmittel zu schlechteren Resultaten als die Verwendung von Polyaluminiumchlorid ohne weiteres Koagulationshilfsmittel führte.

Die Publikation "Stickstoff und Phosphor in Fließgewässern", Arbeitsbericht des ATV-Ausschusses 2.1, Korrespondenz Abwasser 11/87 setzt sich mit der Notwendigkeit einer weitgehenden Stickstoffoxidation in Kläranlagen, einer weitgehenden Stickstoffelimination in Kläranlagen und der Notwendigkeit einer Phosphorelimination in Fließgewässern auseinander. Bezüglich der Herkunft von Phosphorfrachten in den Fließwässern wird davon ausgegangen, dass der überwiegende Anteil aus punktförmigen Abwasserleitungen stammt. Es wird dargelegt:
"Die in der Bundesrepublik Deutschland in die Fließwässer eingetragenen Phosphorfrachten können etwas halbiert werden, wenn bei allen Kläranlagen mit Anschlussgrößen über 20 000 EW Phosphor eliminiert wird. Dadurch wird die Gefahr extremer Eutrophierungserscheinungen vermindert. Unter Gesichtspunkten der Zweckmäßigkeit und Wirtschaftlichkeit sollten die Eliminationsleistungen in Abhängigkeit von der jeweiligen Anschlussgröße zwischen etwa 70% und 95% gestaffelt und insbesondere auch die Leistungsfähigkeiten chlorid- und sulfatfreier Fällungsverfahren sowie biologischer Verfahren zur Phosphorelimination voll ausgeschöpft werden. Die mit einer Phosphorelimination verbundenen positiven Nebeneffekte würden ebenfalls erheblich zum Gewässerschutz beitragen."

Calciumcarbonat wird in der Publikation nicht erwähnt.

Das Gebrauchsmuster CN 205328829 U offenbart eine Vorrichtung zur Abwasserbehandlung für Restaurants, umfassend einen Bereich zur Entfernung von Phosphor, der eine Mischung aus Kalkstein und Aluminiumfüllstoff umfasst. Eisensalze werden in dem Gebrauchsmuster allerdings nicht erwähnt.

WO 2013/040716 A1 beschreibt ein Verfahren zur Behandlung von Phosphat-haltigem Abwasser, bei welchem man
a) ein erstes Kation zum Abwasser zugibt, um Fluorsilikat aus dem Abwasser auszufällen;
b) ein zweites Kation zum Abwasser zugibt, um Fluorid aus dem Abwasser auszufällen;
c) den pH des Abwassers erhöht, um das zweite Kation aus dem Abwasser auszufällen;
d) verbleibende Silica aus dem Abwasser entfernt und
e) Phosphat aus dem Abwasser ausfällt.

Schritt a) soll vorzugsweise eine Erhöhung des pH-Wertes des Abwassers auf ungefähr 2,0 umfassen, um das Fluorsilikat auszufällen.

Die Zugabe des zweiten Kations soll vorzugsweise die Zugabe von Kalkstein umfassen.

Schritt e) soll vorzugsweise die Zugabe eines dritten Kations und/oder eines vierten Kations umfassen, um das Phosphat als Struvit-Analogon auszufällen, welches vorzugsweise Eisenammoniumphosphat umfassen soll.

Andere Hinweise auf Eisensalze sind in der Patentanmeldung nicht zu finden. Ein weiteres, relevantes Dokument ist CN 107 69 79 76.

Der vorliegenden Erfindung lag daher die Aufgabe zugrunde, bessere Möglichkeiten zur Senkung des Phosphatgehalts in Abwässern, insbesondere in kommunalen und industriellen Abwässern, aufzuzeigen. Insbesondere sollten effektivere Möglichkeiten zur Entfernung von Phosphaten aus Abwässern gefunden werden. Dabei sollten die Eigenschaften des Abwassers möglichst nicht nachteilig beeinflusst, sondern möglichst verbessert werden. Darüber hinaus sollten die Eigenschaften des Belebtschlamms, insbesondere sein Absetzverhalten, möglichst nicht nachteilig beeinflusst, sondern möglichst verbessert werden. Weiterhin sollte die Phosphatbelastung fließender Gewässer, in welche die zu reinigenden Abwässer eingeleitet werden, verringert und eine Überdüngung der fließenden Gewässer möglichst vermieden werden. Ferner wurde eine möglichst kostengünstige Lösung dieser Aufgaben angestrebt, die sich auf möglichst einfache Art und Weise realisieren lässt.

Gelöst werden diese Aufgaben durch die Bereitstellung eines Mittels zur Senkung des Phosphatgehalts in Abwässern mit allen Merkmalen des unabhängigen Anspruchs 1.

Der Anspruch 1 und die weiteren unabhängigen Ansprüche 9 und 13 (Verfahrensanspruch und Verwendungsanspruch) umfassen die wesentlichen Merkmale der Erfindung. Weitere, bevorzugte Ausführungsformen befinden sich in den abhängigen Ansprüche 2-8, 10-12, 14-15.

Dadurch, dass man ein Mittel bereitstellt, welches, jeweils bezogen auf sein Gesamtgewicht, >50,0 Gew.-% Calciumcarbonat und mindestens 1,0 Gew.-% eines Eisensalzes umfasst, wobei das Calciumcarbonat eine Wasserlöslichkeit von kleiner 20 mg/1000 mL Wasser bei 25°C aufweist, gelingt es auf überraschende Art und Weise, ein Mittel zur Senkung des Phosphatgehalts in Abwässern, insbesondere in kommunalen und industriellen Abwässern, zugänglich zu machen, welches eine effektivere Entfernung von Phosphaten aus Abwässern ermöglicht. Dabei werden die Eigenschaften des Abwassers nicht nachteilig beeinflusst, sondern insbesondere durch die pH-Wert-puffernde Wirkung des Mittels deutlich verbessert. Darüber hinaus werden die Eigenschaften des Belebtschlamms, insbesondere sein Absetzverhalten, nicht nachteilig beeinflusst, sondern signifikant verbessert. Weiterhin wird die Phosphatbelastung fließender Gewässer, in welche die gereinigten Abwässer eingeleitet werden, erfindungsgemäß deutlich verringert und eine Überdüngung der fließenden Gewässer bestmöglich vermieden. Ferner wurde eine äußerst leistungsfähige Lösung der der Erfindung zugrundeliegenden Aufgaben gefunden, die sich auf überaus einfache Art und Weise realisieren lässt.

Durch den Einsatz des erfindungsgemäßen Mittels wird mehr im Abwasser gelöstes Phosphat entfernt als bei alleinigem Einsatz von Eisen- oder Aluminiumsalzen. Zusätzlich verhindert das erfindungsgemäße Mittel ein Absinken des pH-Wertes an der Zugabestelle, wodurch mehr Phosphat ausfällt werden kann.

Darüber hinaus wird durch das erfindungsmäße Mittel der Einsatz von korrosiven Substanzen bestmöglich verringert oder gar vermieden.

Ein weiterer Vorteil einer besonders bevorzugten Ausführungsform des erfindungsgemäßen Mittels ist darin zu sehen, dass es kein Gefahrgut gemäß des Europäischen Übereinkommens über die internationale Beförderung gefährlicher Güter auf der Straße (ADR) darstellt und daher auf einfache Art und Weise gehandhabt und eingesetzt werden kann.

Weiterhin ist das erfindungsgemäße Mittel besonders umweltschonend. Die Aufsalzung der gereinigten Wässer ist erfindungsgemäß deutlich geringer als nach herkömmlichen Verfahren zur Reinigung von Abwässern.

Gegenstand der vorliegenden Erfindung ist dementsprechend ein Mittel zur Senkung des Phosphatgehalts in Abwässern, insbesondere des ortho-Phosphatgehalts.

In diesem Zusammenhang ist Abwasser ein Oberbegriff für aus verschiedenen Quellen stammende Wässer, die über bauliche Anlagen fortgeleitet werden, und umfasst insbesondere Regenwasser, insbesondere von befestigten Flächen abfließendes Niederschlagswasser; Schmutzwasser, insbesondere durch Gebrauch verunreinigtes ("in seinen Eigenschaften oder seiner Zusammensetzung verändertes") Wasser, das insbesondere Grauwasser (nach EN 12056-1 fäkalienfreies, gering verschmutztes Abwasser, wie es etwa beim Duschen, Baden oder Händewaschen anfällt, aber auch aus der Waschmaschine kommt und zur Aufbereitung zu Brauch- bzw. Betriebswasser dienen kann. Vom Dach oder Balkon abfließendes Regenwasser zählt auch hierzu.) einschließt; Schwarzwasser (nach ISO 6107-7:1997 häusliches Abwasser mit Urin und/oder fäkalen Feststoffen, insbesondere umfassend Gelbwasser (Urin mit Spülwasser) und Braunwasser (Fäzes, Spülwasser und Toilettenpapier, ohne Urin)); Fremdwasser, welches in die Kanalisation durch bauliche Schäden eintritt.

Abwässer werden im Zuge der Abwasserbeseitigung in der Kanalisation gesammelt und transportiert, in Mitteleuropa üblicherweise in Kläranlagen behandelt und danach in als Vorfluter dienende Gewässer oder durch Versickerung, Verrieselung oder Verregnung in das Grundwasser eingeleitet.

Im Rahmen der vorliegenden Erfindung weist das zu reinigende Abwasser üblicherweise einen pH-Wert, gemessen bei 25°C, im Bereich von 5,0 bis 10,0, insbesondere im Bereich von 6,0 bis 9,0, auf. Nach der erfindungsgemäßen Abwasserbehandlung liegt der pH-Wert des gereinigten Wassers, gemessen bei 25°C, vorzugsweise im Bereich von 5,0 bis 10,0, insbesondere im Bereich von 6,0 bis 9,0.

Phosphate sind die Salze und Ester der Orthophosphorsäure (H₃PO₄) Im weiteren Sinn werden auch die Kondensate (Polymere) der Orthophosphorsäure und ihre Ester Phosphate genannt. Phosphor liegt bei allen diesen Verbindungen in der Oxidationsstufe (V) vor.

Die Ermittlung des Phosphatgehalts im Abwasser, insbesondere des ortho-Phosphatgehalts, kann auf an sich bekannte Weise erfolgen. Besonders bewährt hat sich eine Bestimmung des Phosphatgehalts im Abwasser, insbesondere des ortho-Phosphatgehalts, mittels kommerziell erhältlicher photometrischer Tests. Alternativ kann die Bestimmung des Phosphorgehalts auch mittels ICP-OES erfolgen.

Das erfindungsgemäße Mittel zur Senkung des Phosphatgehalts in Abwässern umfasst, jeweils bezogen auf sein Gesamtgewicht,
>50,0 Gew.-%, bevorzugt >60,0 Gew:-% bis 99,0 Gew.-%, besonders bevorzugt >60,0 Gew.-% bis 80,0 Gew.-%, insbesondere 65,0 Gew.-% bis 75,0 Gew.-%, Calciumcarbonat und
mindestens 1,0 Gew.-%, bevorzugt mindestens 10,0 Gew.-%, besonders bevorzugt 20,0 Gew.-% bis <40,0 Gew.-%, insbesondere 25,0 Gew.-% bis 35,0 Gew.-%, eines Eisensalzes.

Besonders bevorzugt beträgt der Gewichtsanteil von Calciumcarbonat und Eisensalz zusammen im erfindungsgemäßen Mittel >51,0 Gew.-%, vorzugsweise >60,0 Gew.-%, zweckmäßigerweise >70,0 Gew.-%, noch mehr bevorzugt mindestens 80,0 Gew.-%, ganz besonders bevorzugt mindestens 90,0 Gew.-%, insbesonders mindestens 99,0 Gew.-%. Im Rahmen einer ganz besonders bevorzugten Ausführungsform der vorliegenden Erfindung besteht das erfindungsgemäße Mittel ausschließlich aus Calciumcarbonat und mindestens einem Eisensalz.

Die Wasserlöslichkeit des Calciumcarbonats bei 25°C ist kleiner 20 mg/1000 ml Wasser, bevorzugt kleiner 16 mg/1000 ml Wasser, besonders bevorzugt kleiner 15 mg/1000 ml Wasser, ganz besonders bevorzugt kleiner 14 mg/1000 ml Wasser, günstigerweise kleiner 12 mg/1000 ml Wasser, vorzugsweise kleiner 10 mg/1000 ml Wasser, noch mehr bevorzugt kleiner 8 mg/1000 ml Wasser, insbesondere kleiner 7 mg/1000 ml Wasser.

Die Wasserlöslichkeit des Calciumcarbonats kann auf an sich bekannte Weise durch Rühren des Calciumcarbonats in CO₂-freien destillierten Wasser bei 25°C für mindestens 1 h und anschließende Bestimmung der gelösten Calciumcarbonatmenge, vorzugsweise mittels photometrischer Verfahren, ermittelt werden.

Das erfindungsgemäße Mittel umfasst mindestens ein Eisensalz, vorzugsweise ein Eisen (II)-salz oder ein Eisen (III)-salz. Bevorzugte Eisensalze sind FeSO₄, FeSO₄·H₂O, FeSO₄·4H₂O, FeSO₄-5H₂O, FeSO₄·6H₂O, FeSO₄·7H₂O, FeCl₃, FeCl₃·6H₂O, FeCl₂, FeCl₂·4H₂O, Fe₂(SO₄)₃, Fe₂(SO₄)₃·1H₂O und FeCl(SO₄). Für die Zwecke der vorliegenden Erfindung sind Eisen(II)-salze, insbesondere Eisen(II)-sulfate, ganz besonders geeignet.

Das Calciumcarbonat unterliegt grundsätzlich keinen weiteren Beschränkungen und kann grundsätzlich frei gewählt werden. Für die Zwecke der vorliegenden Erfindung hat sich jedoch die Verwendung von Calciumcarbonaten mit einer mittleren Teilchengröße im Bereich von 5 µm bis 30 µm ganz besonders bewährt. Weiterhin weist das Calciumcarbonat vorzugsweise eine spezifische Oberfläche BET im Bereich von 0,4 m²/g bis 10,0 m²/g, bevorzugt im Bereich von 0,6 m²/g bis 6,0 m²/g, insbesondere im Bereich von 0,8 m²/g bis 2,0 m²/g, auf.

Ferner wird im Rahmen der vorliegenden Erfindung vorzugsweise ein gemahlenes Calciumcarbonat eingesetzt. Gemahlenes Calciumcarbonat ("ground calcium carbonate"; GCC) im Sinne der vorliegenden Erfindung ist ein Calciumcarbonat, das aus natürlichen Quellen, wie Marmor, Kreide, Kalkstein oder Dolomit erhalten wurde. GCC wird üblicherweise durch Mahlen, Klassieren, Sichten und/oder Nass- oder Trockenfraktionieren gewonnen. Aufgrund seines natürlichen Ursprungs kann GCC bestimmte Mengen an Magnesium enthalten, wie beispielsweise aus dolomitischen Kalkstein hergestelltes GCC.

GCC unterscheidet sich von PCC ("precipitated calcium carbonate"), einem synthetischen Material, das üblicherweise durch Fällung nach Umsetzung von Kohlendioxid mit Calciumhydroxid in wässriger Umgebung, durch Fällung einer Calcium- und einer Carbonatquelle in Wasser oder durch Fällung von Calcium- und Carbonationen, beispielsweise CaCl₂ und Na₂CO₃, aus Lösung erhalten wird.

Für die Zwecke der vorliegenden Erfindung besonders geeignetes GCC wird aus Kalkstein, bevorzugt aus Riffkalk, besonders bevorzugt aus devonischem Massenkalk, insbesondere aus Lahnmarmor gewonnen.

Als Kalkstein werden Sedimentgesteine bezeichnet, die überwiegend aus dem chemischen Stoff Calciumcarbonat (CaCO₃) in Form der Mineralien Calcit und Aragonit bestehen.

Riffkalke (auch Riffkalkstein) sind Kalksteine, die aus massenhaften Ansammlungen von Korallen, Schwämmen und anderen festsitzende Meeresorganismen hervorgehen. Sie entstehen vorwiegend in küstennahen oder anderen flachen Meeresregionen. Im Gegensatz zu Schillkalken sind die Kalkskelette nicht durch Meereswellen zusammengespült worden, sondern im ursprünglichen Lebensraum der Organismen, oft in Lebendstellung (in situ), überliefert.

Besonders mächtige und ausgedehnte Riffkalkvorkommen werden häufig als Massenkalk bezeichnet. Beispiele sind in Deutschland etwa aus dem Rheinischen Schiefergebirge bekannt. Hier bilden devonische Riffkalke in der Eifel, im Bergischen Land und Sauerland sowie im Lahn-Dill-Gebiet ausgedehnte Vorkommen, die an vielen Stellen für die Zementherstellung und als Naturwerksteine gewonnen werden. Diese Riffkalke sind zu einem bedeutenden Teil aus Stromatoporen (ausgestorbenen schwammähnlichen Organismen) und ausgestorbenen Korallenformen aufgebaut. Typische Leitfossilien dieses Massenkalkes sind die Armfüßer (Brachiopoda) Stringocephalus burtini und Uncites gryphus.

Als Lahnmarmor (früher Nassauer Marmor genannt) werden polierbare Kalksteine des Mitteldevons im Südosten des Rheinischen Schiefergebirges zusammengefasst. Zentren der Gewinnung waren Balduinstein, Hahnstätten, Diez (Rhein-Lahn-Kreis, Rheinland-Pfalz), Villmar und Schupbach (beide Landkreis Limburg-Weilburg, Hessen).

Die Herstellung des erfindungsgemäßen Mittels kann auf an sich bekannte Weise durch Mischen der Komponenten erfolgen. Eine Zerkleinerung des Mittels, beispielswiese durch Mahlen, ist in der Regel nicht erforderlich.

Die Senkung des Phosphatgehalts in Abwässern kann mittels eines Verfahrens erfolgen, bei welchem man dem zu reinigen Abwasser das erfindungsgemäße Mittel, vorzugsweise in einer Menge im Bereich von 1 ppm bis <1000 ppm, bevorzugt im Bereich von 5 ppm bis 500 ppm, besonders bevorzugt im Bereich von 10 ppm bis 400 ppm, zweckmäßigerweise im Bereich von 15 ppm bis 250 ppm, insbesondere im Bereich von 20 ppm bis 100 ppm, bezogen auf das Gesamtgewicht des zu reinigenden Abwassers, zusetzt.

Die Zugabestelle des erfindungsgemäßen Mittels zur Senkung des Phosphatgehaltes kann grundsätzlich frei gewählt werden.

Im Rahmen einer ersten bevorzugten Ausführungsform der vorliegenden Erfindung erfolgt die Zugabe des erfindungsgemäßen Mittels direkt in eine biologische Reinigungsstufe der Abwasserreinigung, um eine Simultanfällung zu erreichen, bei der im Wasser gelöste Phosphationen durch die Zugabe des erfindungsgemäßen Mittels in wasserunlösliche Phosphatsalze überführt werden.

Im Rahmen einer weiteren bevorzugten Ausführungsform der vorliegenden Erfindung erfolgt die Zugabe des erfindungsgemäßen Mittels vor einer biologischen Stufe der Abwasserreinigung, um eine Vorfällung von Phosphaten aus dem Abwasser durch die Überführung in ungelöste Metallsalze zu erreichen.

Im Rahmen noch einer weiteren bevorzugten Ausführungsform der vorliegenden Erfindung erfolgt die Zugabe des erfindungsgemäßen Mittels nach einer biologischen Stufe der Abwasserreinigung, um eine Nachfällung von Phosphaten nach der Nachklärung zu erreichen.

Für Kläranlagen haben sich die folgenden Zugabestellen ganz besonders bewährt:
- in den Ablauf der Vorklärung,
- in den Zu- oder Ablauf von Bio-P-Becken, Denitrifikationsbecken, Nitrifikationsbecken, Kombinationsbecken aus Deni und Nitrifikation sowie
- in den Zulauf zur Nachklärung.

Das Mittel kann bevorzugt an einer turbulenten Stelle direkt in den Belebtschlamm dosiert werden.

Besonders bevorzugt wird erfindungsgemäß die Zugabe des erfindungsgemäßen Mittels direkt in eine biologische Reinigungsstufe der Abwasserreinigung sowie die Zugabe des erfindungsgemäßen Mittels vor einer biologischen Stufe der Abwasserreinigung, wobei bei Zugabe des erfindungsgemäßen Mittels direkt in eine biologische Reinigungsstufe der Abwasserreinigung die besten Ergebnisse erzielt werden.

Am besten wird das Mittel an einer möglichst turbulenten Stelle direkt in den Belebtschlamm dosiert, zweckmäßigerweise zwischen zwei Belebungsbecken an einer Überlaufkante, vor oder nach einer Pumpe oder einem Hebewerk.

Vorzugsweise wird das erfindungsgemäße Mittel als günstigerweise trockene pulverförmige Zusammensetzung dem Abwasser mittels einer Dosiersvorrichtung, bevorzugt mittels einer Schnecke, die an eine Lagervorrichtung, bevorzugt ein Silo, angeschlossen ist, dem Abwasser zugesetzt. Eine weitere bevorzugte Darreichungsform ist die direkte Dosierung des Mittels in die Abwasserreinigungsanlage, insbesondere eine Kläranlage, durch Zugabe des Mittels, bevorzugt aus Sackware oder aus BigBags, zweckmäßigerweise gezielt in den Belebtschlamm.

Die Dosierung des erfindungsgemäßen Mittels kann diskontinuierlich oder kontinuierlich erfolgen, wobei grundsätzlich in kontinuierlichen Verfahren möglichst gleichmäßige Zugabemengen bevorzugt werden. Besonders bevorzugt werden mehrmals wöchentliche oder tägliche Zudosierungen. Idealerweise dosieren größere Kläranlagen das Mittel mit einer Siloanlage mit Austragssystem in kleinen Portionen über den Tag verteilt. Aufgrund der Pufferwirkung des erfindungsgemäßen Mittels muss es jedoch nicht zwingend kontinuierlich rund um die Uhr gleichmäßig verteilt zudosiert werden.

Durch die Verwendung des erfindungsgemäßen Mittels kann eine Senkung des Phosphatgehalts in Abwässern, insbesondere des ortho-Phosphatgehalts in Abwässern, erreicht werden, die die absenkende Wirkung von Aluminiumsalzen oder Eisensalzen allein deutlich übersteigt. Da auch mit Calciumcarbonat alleine keine vergleichbare absenkende Wirkung erzielt werden kann, ist die im Rahmen der vorliegenden Erfindung beobachtete synergetische Wirkung unter Verwendung des erfindungsgemäßen Mittels besonders überraschend.

Nachfolgend wird die Erfindung durch Beispiele und Vergleichsbeispiele weiter veranschaulicht, ohne dass hierdurch eine Beschränkung des Erfindungsgedankens erfolgen soll.

### Bestimmung der Wasserlöslichkeit des Calciumcarbonats

Die Bestimmung der Wasserlöslichkeit des Calciumcarbonats erfolgte in reinst, CO₂-freien Wasser bei 25°C durch Rühren des Calciumcarbonats für eine 1h und photometrische Bestimmung.

### Calciumcarbonat

Für die erfindungsgemäßen Beispiele wurde devonischer gemahlener Kalkstein (Lahnmamor; GCC) mit folgenden Eigenschaften eingesetzt:
- Mittlere Teilchengröße d₅₀: 15,5 µm;
- BET: 1,2 m²/g;
- Wasserlöslichkeit: 6 mg/L.

### Beispiel 1

Eine wässrige K₂HPO₄-Lösung (Phosphatgehalt: 5,8 ppm; pH-Wert: 7,7) wurde versetzt mit
a) 70 mg CaCO₃
b) 70 mg CaCO₃ und 30 mg FeSO₄·H₂O
c) 30 mg FeSO₄·H₂O
und 5 h gerührt.

### Ergebnisse:

a) Phosphatgehalt nach Behandlung: 5,8 ppm; pH-Wert: 7,5
b) Phosphatgehalt nach Behandlung: 2,8 ppm; pH-Wert: 7,2
c) Phosphatgehalt nach Behandlung: 3,6 ppm; pH-Wert: 6,4

### Beispiel 2

Eine wässrige K₂HPO₄-Lösung (Phosphatgehalt: 5 ppm; pH-Wert: 7,7) wurde versetzt mit
a) 70 mg CaCO₃
b) 30 mg FeSO₄·H₂O
c) 70 mg CaCO₃ und 30 mg FeSO₄·H₂O
d) 120 mg CaCO₃ und 30 mg FeSO₄·H₂O
e) 270 mg CaCO₃ und 30 mg FeSO₄·H₂O

### Ergebnisse:

Nach einer Standzeit von 30 h wurden die folgenden Ergebnisse erhalten:
a) Phosphatgehalt nach Behandlung: 5 ppm; pH-Wert: 7,5
b) Phosphatgehalt nach Behandlung: 3,1 ppm; pH-Wert: 6,1
c) Phosphatgehalt nach Behandlung: 2,9 ppm; pH-Wert: 7,3
d) Phosphatgehalt nach Behandlung: 2,8 ppm; pH-Wert: 7,5
e) Phosphatgehalt nach Behandlung: 2,6 ppm; pH-Wert: 7,2

### Beispiel 3

In einer kommunalen Kläranlage (pH-Wert des Wassers: 6-9) wurden in drei Phasen folgende Fällungsmittel gegeben.
Phase 1: FeSO₄·H₂O (2,1 kg/100 m³)
Phase 2: FeSO₄·H₂O (2,1 kg/100 m³)+ CaCO₃ (4,9 kg/100 m³)
Phase 3: CaCO₃ (4,9 kg/100 m³)

Der Ausgangsphosphatwert lag bei 2,2 ppm im Ablauf der Kläranlage, die Mengen einzelner Komponenten wurden konstant gehalten.

Die Phosphatgehalte im Ablauf der Kläranlage in Phase 1 sanken auf 1,2 ppm

Die Phosphatgehalte im Ablauf der Kläranlage in Phase 2 sanken auf 0,5 ppm

Die Phosphatgehalte im Ablauf der Kläranlage in Phase 3 nähern sich erneut dem Ausgangsphosphatgehalt an.

## Patentansprüche

1. Mittel zur Senkung des Phosphatgehalts in Abwässern umfassend, jeweils bezogen auf sein Gesamtgewicht, >50,0 Gew.-% Calciumcarbonat und mindestens 1,0 Gew.-% eines Eisensalzes, **dadurch gekennzeichnet, dass** das Calciumcarbonat eine Wasserlöslichkeit von kleiner 20 mg/1000 ml Wasser bei 25°C aufweist.

2. Mittel nach Anspruch 1, **dadurch gekennzeichnet, dass** das Eisensalz aus der Gruppe, bestehend aus FeSO₄, FeSO₄·H₂O, FeSO₄·4H₂O, FeSO₄·5H₂O, FeSO₄·6H₂O, FeSO₄·7H₂O, FeCl₃, FeCl₃·6H₂O, FeCl₂, FeCl₂·4H₂O, Fe₂(SO₄)₃, Fe₂(SO₄)₃·1H₂O und FeCl(SO₄), ausgewählt ist.

3. Mittel nach Anspruch 1 oder 2, **dadurch gekennzeichnet, dass** das Eisensalz ein Eisen(II)-salz, insbesondere Eisen(II)-sulfat, ist.

4. Mittel nach mindestens einem der vorangehenden Ansprüche, **dadurch gekennzeichnet, dass** das Mittel, jeweils bezogen auf sein Gesamtgewicht, >60,0 Gew.-% Calciumcarbonat und mindestens 10,0 Gew.-% eines Eisensalzes umfasst.

5. Mittel nach mindestens einem der vorangehenden Ansprüche, **dadurch gekennzeichnet, dass** das Calciumcarbonat eine mittlere Teilchengröße im Bereich von 5 µm bis 30 µm aufweist.

6. Mittel nach mindestens einem der vorangehenden Ansprüche, **dadurch gekennzeichnet, dass** das Calciumcarbonat eine spezifische Oberfläche BET im Bereich von 0,4 m²/g bis 10,0 m²/g aufweist.

7. Mittel nach mindestens einem der vorangehenden Ansprüche, **dadurch gekennzeichnet, dass** das Calciumcarbonat gemahlenes Calciumcarbonat umfasst.

8. Mittel nach mindestens einem der vorangehenden Ansprüche, **dadurch gekennzeichnet, dass** das Calciumcarbonat aus Lahnmarmor stammt.

9. Verfahren zur Senkung des Phosphatgehalts in Abwässern, bei welchem man einem Abwasser ein Mittel gemäß mindestens einem der Ansprüche 1 bis 8 zusetzt.

10. Verfahren nach Anspruch 9, **dadurch gekennzeichnet, dass** man dem Abwasser, bezogen auf sein Gesamtgewicht, 1 ppm bis <1000 ppm des Mittels zusetzt.

11. Verfahren nach Anspruch 9 oder 10, **dadurch gekennzeichnet, dass** man als Abwasser Regenwasser, Schmutzwasser und/oder Fremdwasser einsetzt.

12. Verfahren nach Anspruch 9, 10 oder 11, **dadurch gekennzeichnet, dass** man das Mittel in einer Kläranlage an mindestens einer der folgenden Zugabestellen zugibt:
- in den Ablauf der Vorklärung,
- in den Zu- oder Ablauf von Bio-P-Becken, Denitrifikationsbecken, Nitrifikationsbecken, Kombinationsbecken aus Deni und Nitrifikation und/oder
- in den Zulauf zur Nachklärung.

13. Verwendung eines Mittels gemäß mindestens einem der Ansprüche 1 bis 8 zur Senkung des Phosphatgehalts in Abwässern.

14. Verwendung nach Anspruch 13 zur Senkung des ortho-Phosphatgehalts in Abwässern.

15. Verwendung nach Anspruch 13 oder 14 zur Senkung des Phosphatgehalts in Regenwasser, Schmutzwasser und/oder Fremdwasser.

## Claims

1. An agent for reducing the concentration of phosphate in wastewater comprising, respectively with respect to its total weight, > 50.0% by weight of calcium carbonate and at least 1.0% by weight of an iron salt, **characterized in that** the calcium carbonate has a solubility in water of less than 20 mg/1000 mL of water at 25°C.

2. The agent as claimed in claim 1, **characterized in that** the iron salt is selected from the group consisting of FeSO₄, FeSO₄·H₂O, FeSO₄·4H₂O, FeSO₄·5H₂O, FeSO₄·6H₂O, FeSO₄ · 7H₂O, FeCl₃, FeCl₃·6H₂O, FeCl₂, FeCl₂·4H₂O, Fe₂(SO₄)₃, Fe₂ (SO₄)₃·1H₂O and FeCl (SO₄) .

3. The agent as claimed in claim 1 or claim 2, **characterized in that** the iron salt is an iron (II) salt, in particular iron (II) sulphate.

4. The agent as claimed in at least one of the preceding claims, **characterized in that** the agent comprises, respectively with respect to its total weight, >60.0% by weight of calcium carbonate and at least 10.0% by weight of an iron salt.

5. The agent as claimed in at least one of the preceding claims, **characterized in that** the calcium carbonate has a mean particle size in the range from 5 µm to 30 µm.

6. The agent as claimed in at least one of the preceding claims, **characterized in that** the calcium carbonate has a BET specific surface area in the range from 0.4 m²/g to 10.0 m²/g.

7. The agent as claimed in at least one of the preceding claims, **characterized in that** the calcium carbonate comprises ground calcium carbonate.

8. The agent as claimed in at least one of the preceding claims, **characterized in that** the calcium carbonate originates from Lahn marble.

9. A method for reducing the concentration of phosphate in wastewater, in which an agent as claimed in at least one of claims 1 to 8 is added to wastewater.

10. The method as claimed in claim 9, **characterized in that**, with respect to its total weight, 1 ppm to <1000 ppm of the agent is added to the wastewater.

11. The method as claimed in claim 9 or 10, **characterized in that** rainwater, sewage water and/or external water is used as the wastewater.

12. The method as claimed in claim 9, 10 or 11, **characterized in that** the agent is added to a wastewater treatment plant at at least one of the following dosing points:
- into the preliminary sedimentation outflow,
- into the inflow or outflow from bio-P tanks, denitrification tanks, nitrification tanks, combined denitrification and nitrification tanks, and/or
- into the secondary sedimentation inflow.

13. Use of an agent as claimed in at least one of claims 1 to 8 for reducing the concentration of phosphate in wastewater.

14. Use as claimed in claim 13, for reducing the concentration of orthophosphate in wastewater.

15. Use as claimed in claim 13 or claim 14, for reducing the concentration of phosphate in rainwater, sewage water and/or external water.

## Revendications

1. Agent, destiné à abaisser la teneur en phosphate dans des eaux usées, comprenant, chaque fois en rapport à son poids total, > 50,0 % en poids de carbonate de calcium et au moins 1,0 % en poids d'un sel ferreux, **caractérisé en ce que** le carbonate de calcium fait preuve d'une hydrosolubilité inférieure à 20 mg/1000 ml d'eau à 25°C.

2. Agent selon la revendication 1, **caractérisé en ce que** le sel ferreux est sélectionné dans le groupe comprenant le FeSO₄, le FeSQ₄·H₂O, le FeSO₄ -4H₂O, le FeSO₄·5H₂O, le FeSO₄·6H₂O, le FeSO₄·7H₂O, le FeCl₃, le FeCl₃·6H₂O, leFeCl₂, le FeCl_{2.}4H₂O, le Fe₂(SO₄)₃, le Fe₂(SO₄)₃·lH₂O et le FeCl (SO₄) .

3. Agent selon la revendication 1 ou 2, **caractérisé en ce que** le sel ferreux est un sel (II) ferreux, notamment un sulfate (II) ferreux.

4. Agent selon au moins l'une quelconque des revendications précédentes, **caractérisé en ce que** l'agent comprend, chaque fois en rapport à son poids total, > 60,0 % en poids de carbonate de calcium et au moins 10,0 % en poids d'un sel ferreux.

5. Agent selon au moins l'une quelconque des revendications précédentes, **caractérisé en ce que** le carbonate de calcium présente une taille moyenne des particules de l'ordre de 5 µm à 30 µm.

6. Agent selon au moins l'une quelconque des revendications précédentes, **caractérisé en ce que** le carbonate de calcium présente une surface BET spécifique de l'ordre de 0,4 m²/g à 10,0 m²/g.

7. Agent selon au moins l'une quelconque des revendications précédentes, **caractérisé en ce que** le carbonate de calcium comprend un carbonate de calcium broyé.

8. Agent selon au moins l'une quelconque des revendications précédentes, **caractérisé en ce que** le carbonate de calcium provient du marbre de la Lahn.

9. Procédé, destiné à abaisser le teneur en phosphate dans des eaux usées, lors duquel l'on additionne à des eaux usées un agent selon au moins l'une quelconque des revendications 1 à 8.

10. Procédé selon la revendication 9, **caractérisé en ce que** l'on ajoute à des eaux usées, en rapport à leur poids total, de 1 ppm à < 1000 ppm de l'agent.

11. Procédé selon la revendication 9 ou 10, **caractérisé en ce que** l'on met en œuvre au en tant qu'eaux usées des eaux pluviales, des effluents et/ou des eaux parasites.

12. Procédé selon la revendication 9, 10 ou 11, **caractérisé en ce que** l'on additionne l'agent dans une station d'épuration au moins à l'un des points addition suivants :
- dans l'écoulement de la pré-décantation,
- dans l'arrivée et ou l'écoulement de bassins bio-p, dans les bassins de dénitrification, dans les bassins mixtes de déni- et de nitrification, et/ou
- dans l'arrivée de la décantation secondaire.

13. Utilisation d'un agent selon au moins l'une quelconque des revendications 1 à 8, en vue d'abaisser la teneur en phosphate dans des eaux usées.

14. Utilisation selon la revendication 13, en vue d'abaisser la teneur en orthophosphate dans des eaux usées.

15. Utilisation selon la revendication 13 ou 14, en vue d'abaisser la teneur en phosphate dans des eaux pluviales, des effluents et/ou des eaux parasites.
